Europäisches Patentamt

European Patent Office

Office européen des brevets

(11) Publication number: **0 378 311**
**A2**

## (12) EUROPEAN PATENT APPLICATION

(21) Application number: **90300103.0**

(22) Date of filing: **04.01.90**

(51) Int. Cl.⁵: **B62D 5/08**

(30) Priority: **07.01.89 GB 8900323**

(43) Date of publication of application:
**18.07.90 Bulletin 90/29**

(84) Designated Contracting States:
**DE ES FR GB IT SE**

(71) Applicant: **BURMANS LIMITED**
**Wychall Lane**
**Kings Norton Birmingham B38 8AB(GB)**

(72) Inventor: **Hajihosseinloo, Mohammed Ali**
**125 Sellywood Road**
**Bournville Birmingham B30 1XA(GB)**
Inventor: **Campbell, Roy Sidney**
**2 Yeomans Walk**
**Manor Court Bromsgrove B60 3NN(GB)**

(74) Representative: **Carpenter, David et al**
**MARKS & CLERK Alpha Tower Suffolk Street**
**Queensway**
**Birmingham B1 1TT(GB)**

(54) **Control valve.**

(57) An hydraulic control valve comprising fluid inlet means (11), fluid outlet means (12), and a plurality of fixed orifice fluid flow restrictors (16; 17; 18) connected in parallel between said inlet means (11) and said outlet means (12), the restrictors of said plurality of restrictors each being associated with a respective ON/OFF valve (20, 23; 21, 24; 22, 25) whereby the restrictor can be rendered operative, establishing communication between the inlet means and the outlet means through the restrictor, or inoperative, breaking said communication, said ON/OFF valves, in use, being respectively operatively connected to sensors which are arranged to monitor parameters to which said control valve is required to respond. There is also disclosed an hydraulic system utilising the valve in a pressure control mode and an hydraulic power assisted steering system for a vehicle.

FIG 1

## CONTROL VALVES

This invention relates to control valves and to hydraulic systems utilizing such valves.

Control valves, which may be used to control fluid flow or, alternatively, fluid pressure are known in a variety of forms and one such type utilises a spool which is longitudinally and/or angularly movable within a casing or sleeve, both the latter and the spool having a plurality of apertures or passages arranged so that apertures or passages in the casing or sleeve can be aligned with apertures or passages in the spool in different combinations (depending on the position of the spool in relation to the casing or sleeve) in order to provide for a variable fluid flow through the valve or a variable fluid pressure on the "downstream" side of the valve. Whilst such valves can readily be made so that they are both sensitive and accurate in performance over the whole of their operational range (they can for example be designed to have a substantially linear relationship between the output - as represented by fluid flow or fluid pressure - and the input characteristic) they do tend to be somewhat bulky and expensive.

It is therefore an object of the present invention to provide an improved control valve which, although not offering the same degree of accuracy or precision in operation as is the case with the above-mentioned control valve, will nevertheless comprise an acceptable and relatively inexpensive alternative.

In accordance with a first aspect of the present invention there is provided a control valve comprising fluid inlet means, fluid outlet means, and a plurality of fixed orifice fluid flow restrictors connected in parallel between said inlet means and said outlet means, the restrictors of said plurality of restrictors each being associated with a respective ON/OFF valve whereby the restrictor can be rendered operative, establishing communication between the inlet means and the outlet means through the restrictor, or inoperative, breaking said communication, said ON/OFF valves, in use, being respectively operatively connected to sensors which are arranged to monitor parameters to which said control valve is required to respond.

Preferably, each of said ON/OFF valves is linearly movable and conveniently comprises a plunger which is connected to a solenoid.

A control valve in accordance with the present invention may form a flow control valve in which fluid flows through the control valve from said inlet means to said outlet means via one or more of said restrictors. In this case, said flow control valve preferably has a by-pass valve which is arranged to open when the flow rate of fluid passing through the restrictor or restrictors which are open is less than the flow rate of fluid flowing through said fluid inlet means. Desirably there is also provided a pressure relief valve.

In an alternative construction, a control valve in accordance with the invention comprises a pressure control valve in which case there is an additional permanently open restrictor with which the open and closable restrictors define a pressure divider. When used in a pressure control mode the aforementioned by-pass valve may be dispensed with.

More specifically, a control valve in accordance with the invention may comprise a block which is formed with a plurality of passages comprising an inlet, an outlet and other passages interconnecting said inlet and said outlet, some at least of said other passages being each associates with the plunger of a solenoid which can be moved between a position in which the associated passage is open and an alternative position in which the associated passage is closed, said solenoids being connected in use to a microprocessor which itself is connected in use to a plurality of sensors monitoring parameters to which the control valve is required to respond.

A control valve as mentioned above can find use advantageously in an hydraulic system of the kind having primary and secondary hydraulic circuits both energised by an hydraulic pressure source of the primary circuit. Thus it is an object of the present invention to provide an hydraulic system of the kind specified wherein control over the pressure energising the secondary circuit can be effected in a simple and convenient manner.

The use of such a system is advantageous in vehicle power steering technology and thus it is an object of a preferred embodiment of the invention to provide a variable rate power assisted steering stem, for a road vehicle, in a simple, cost effective, and convenient form.

In accordance with a second aspect of the invention there is provided an hydraulic system comprising a primary hydraulic circuit, a primary source of hydraulic pressure for energising said primary circuit, a secondary circuit, and a pressure divider unit whereby hydraulic pressure derived from said primary source is applied to said secondary circuit to energise said secondary circuit, said pressure divider unit comprising a plurality of fixed orifice fluid flow restrictors connected in parallel between a supply line which, in use, receives hydraulic pressure from said primary source, and the inlet of a further flow restrictor, the restrictors of said plurality of restrictors each being associated with a respective electrically operable ON/OFF valve whereby the restrictor can be rendered operative, or inoperative, said secondary hydraulic circuit receiving hydraulic pressure from the line connecting the outlets of said restrictors of said plurality of restrictors and the inlet of said further restrictor whereby the pressure supplied to said secondary hydraulic circuit is a proportion of the pressure in said supply line, the proportion being determined by said further restrictor, and the operative restrictor, or combination of operative restrictors of said plurality of restrictors.

Conveniently said primary hydraulic circuit includes a power assistance mechanism for a vehicle steering system, said primary source of hydraulic pressure is a hydraulic pump driven by the engine of the vehicle in use, and said secondary hydraulic circuit includes the stiffness control arrangement of the steering wheel operated valve of the power assistance mechanism.

Preferably said stiffness control arrangement is axially operable.

The invention will now be more particularly described with reference to the accompanying drawings wherein

Figure 1 is a sectional view of one example of a control valve (in this case a flow control valve) in accordance with an example of the invention,

Figure 2 is a scrap view similar to Figure 1 and illustrating a modification,

Figure 3 is a schematic view illustrating one application in which a valve as shown in Figure 1 can be used,

Figure 4 is a sectional view of an alternative construction (in this case a pressure control valve) in accordance with an example of the invention, and,

Figure 5 is a diagrammatic representation of a hydraulic system in accordance with one example of a second aspect of the present invention.

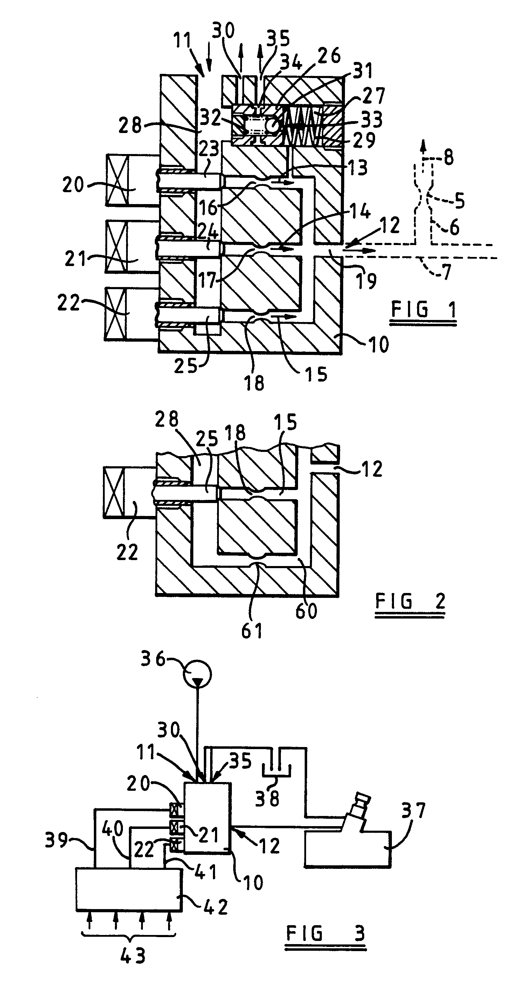

Referring firstly to Figure 1 the example of a control valve constructed in accordance with the present invention and shown in full lines therein comprises a cuboidal metallic block 10. Said block is provided with an inlet 11 and an outlet 12 and in use said inlet would be connected to a supply of fluid such as may be provided by any convenient form of pump whereas the outlet would be connected to a device or mechanism which it is desired to control.

Within said block 10 is provided a plurality of passages indicated respectively by reference numerals 13, 14 and 15 and within each of said passages there is formed a constriction providing a restrictor or orifice 16, 17 or 18. Conveniently the passages 13, 14 and 15 are interconnected on the downstream sides of the respective orifices 16, 17 and 18 to a common outlet passage 19 which leads to the outlet 12.

There is also provided a plurality of solenoids indicated by reference numerals 20, 21 and 22 which are respectively connected to plungers 23, 24 and 25. Each of said plungers is aligned with one of the aforesaid passages 13, 14 and 15 and is disposed on the upstream side of the respective orifice. Thus plunger 23 is aligned with the upstream end of passage 13, plunger 24 is aligned with the upstream end of passage 14 and plunger 25 is aligned with the upstream end of passage 15. Furthermore each of said plungers 23, 24 and 25 is movable by energisation or de-energisation of the associated solenoid so that it is linearly movable between an open position in which the free end of the plunger is clear of the entrance to the adjacent one of said passages 13, 14 and 15 and a closed position as indicated in Figure 1 in which each plunger closes or blocks the upstream end of each of said passages 13, 14 and 15.

There is also provided a piston 26 which is disposed within a bore 27 having an axis which extends at right angles to the axis of a passage 28 which extends inwardly into the block from said inlet 11 and which serves to supply fluid to the passages 13, 14 and 15 when any of the respective plungers 23, 24 and 25 are in the open position. The piston 26 is engaged at its right hand end as shown in Figure 1 by a coiled compression spring 29 which tends to urge the piston to the left so as ordinarily to cover a relief or by-pass passage 30. Accordingly if each of said plungers 23, 24 and 25 are in the closed position whilst the inlet 11 is still receiving a supply of fluid then the piston 26 will be pushed to the right as seen in Figure 1 against the spring 27 in order to open the passage 30 which will thus form a by-pass circuit.

The interior of the aforesaid piston 26 is hollow and within said hollow interior is mounted a ball valve 31 which is normally urged by a spring 32 to close an aperture 33 formed in the right hand end of said piston. Conveniently the pressure which is exertable by said spring 32 is adjustable so that the ball 31 forms an adjustable relief valve which will open by being displaced from the aforesaid aperture 33 if pressure on the downstream side of the valve rises above a predetermined level. Fluid can then escape from the valve via the interior of the piston 26 through passages 34 and thence through a relief passage 35.

The valve as described above is intended to be used as a flow control valve and in one particular application (which is not to be taken in any limiting sense) the valve can be incorporated in a power assisted steering system for a vehicle. Such an arrangement is indicated schematically in Figure 3. Thus the flow control valve 10 is supplied with fluid from an engine driven pump 35 via the inlet 11 and the outlet 12 of said valve supplies fluid to the hydraulically assisted steering gear 37 which conveniently incorporates a hydraulic ram. The by-pass and relief passages 30 and 35 lead to a tank or reservoir 38. The solenoids 20, 21 and 22 are respectively connected to outputs 39, 40 and 41 of a microprocessor 42 having inputs indicated by reference numeral 43. Said inputs would be connected in use to a plurality of sensors (not shown) so as to monitor a number of chosen parameters to which the control valve and accordingly the steering mechanism is required to respond. Such sensors may be arranged for example to monitor parameters such as vehicle speed, ambient temperature, angle of camber or any other desired characteristic.

It will be recognised that if the flow characteristics of the three restrictors 16, 17, 18 are different then there are eight possible flow rates through the valve dependent upon which solenoids 20, 21, 22 are operated. The possibilities range from zero flow when all three passages 13, 14, 15 are closed, to maximum flow when all three passages are open. The addition of a fourth passage and an associated solenoid would raise the number of possible flow rate to sixteen. When all passages are closed there is zero flow between inlet and outlet. However Figure 2 illustrates a modification in which there is always a base flow rate. This is achieved by providing an additional, permanently open passage 60 including a restrictor 61.

As above mentioned, the valve shown in full lines in Figure 1 is a flow control valve but it can be adapted to act as a pressure control valve by providing (as shown in dashed lines in Figure 1) a restrictor 5 which is disposed within a conduit 6 which is connected at one end to a conduit 7 connected in use to the "load", the other end of said conduit 6 being connected to the tank or reservoir as indicated by arrow 8. The restrictor 5 together with the selected restrictor or restrictor 16, 17, 18 act as a pressure divider whereby the pressure in conduit 7 can be controlled. Assuming constant pressure at inlet 11 there will be eight possible pressure level in conduit 7 dependent upon the operation of the solenoids 20, 21, 22. The by-pass arrangement of Figure 1 is not needed in a pressure control version of the valve.

It is to be understood that a control valve as above described can be used in many other applications apart from a vehicle steering system where fine adjustment of the output flow or pressure is not essentially. In other words a control valve constructed in accordance with the invention will offer a relatively simple and inexpensive arrangement for use in applications where a stepwise variation in output is acceptable.

An alternative construction in accordance with the present invention is illustrated in Figure 4 and in this alternative the control valve acts as a pressure control valve. Thus there is provided a generally cuboidal block 44 having an inlet 45 and an outlet 46 which is connected to a tank or reservoir as indicated by reference 46a. Within the interior of said block are a plurality of generally parallel passages 47, 48 and 49, one set of adjacent ends of said passages being interconnected by a passage 50 which is open at its lower end and is there connected to the "load", as indicated by arrow 50a whereas the other set of adjacent ends of said passages 47, 48 and 49 are interconnected by another passage 51, the passage 50 communicating with the inlet 45 and the passage 51 communicating with the outlet 46 which is connected to the tank or reservoir.

The aforesaid block 44 is formed with cross drillings indicated by reference numerals 52, 53 and 54 which intersect respectively the passages 47, 48 and 49 and within said cross drillings 52, 53 and 54 are located the plungers of solenoids (not shown) which can be energised or de-energised as may be required in order to move the aforesaid plungers into positions in which they block the associated passages 47, 48 and 49 or alternatively open such passages.

There is also provided a further passage 55 which has a restrictor 55a and which is permanently open and which in use receives fluid from the inlet 45 via the passage 50, such fluid then flowing into the passage 51 and thence to the tank or reservoir through the outlet 46. The fluid in passage 50 will, via the opening in the lower end of said passage, exert in use a pressure on a device or mechanism which the control valve is required to control. However such pressure can be varied by opening or closing any one or any two or all three of the aforesaid passages 47, 48 and 49 by activating or deactivating the appropriate solenoid or combination of solenoids connected to the plungers which extend into the drillings 52, 53 and 54. The aforesaid solenoids are again conveniently connected to the outputs of a microprocessor having inputs which are connected to sensors monitoring any desired parameters. Furthermore the aforesaid passages 47, 48 and 49 need not necessarily have the same cross sectional area. It is however to be understood that, for the arrangement as shown in Figure 3 to work satisfactorily as a pressure control valve, then it should be supplied in use with a constant input flow.

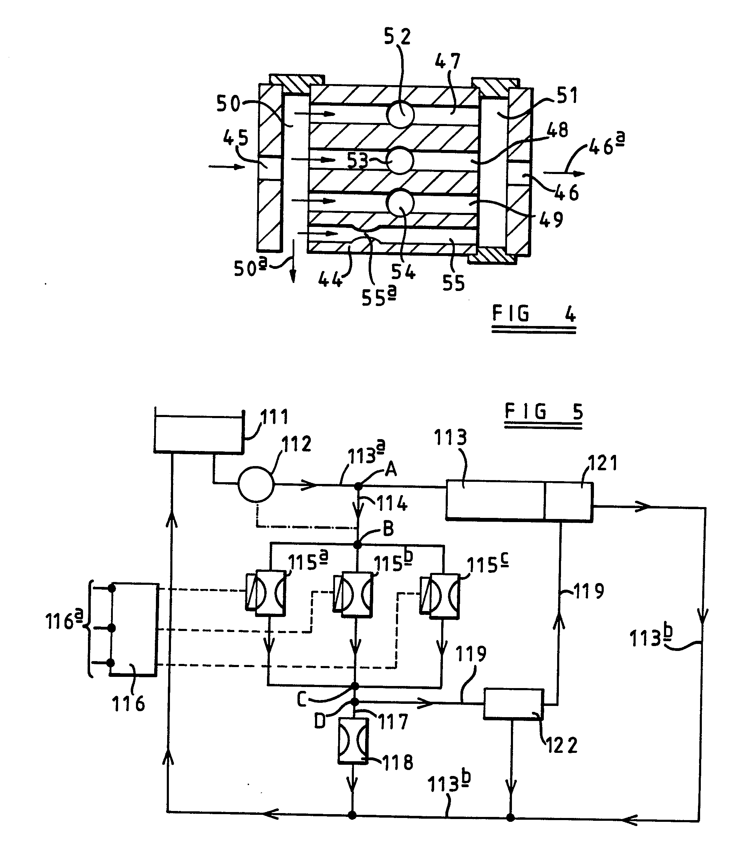

Figure 5 illustrates an hydraulic system, preferably but not exclusively a vehicle power assisted steering system in which the above pressure control valve concept is utilised. The system includes an hydraulic fluid reservoir 111 supplying hydraulic fluid by way of a pump 112 and a line 113a to an hydraulically operated device 113. A low pressure return line 113b returns hydraulic fluid from the device 113 to the reservoir 111. The hydraulic pressure in the line 113a in use, is the back pressure of the primary circuit, and at point A a branch 114 from the line 113a puts the inlet B of a pressure divider unit in communication with the line 113a.

The pressure divider unit comprises a plurality (conveniently three) of fixed orifice fluid flow restrictors 115a, 115b, 115c, each of which has its inlet connected to the point B and its outlet connected to a common point C. The restrictors are of different values, but each has an associated, electrically operable, ON/OFF valve whereby the respective restrictor can be rendered operative or inoperative, that is to say opened or closed, in relation to flow of fluid between the points B and C. A micro-processor 116 controls operation of the valves of the restrictors 115a, 115b, 115c, in accordance with one or more chosen parameters input to the micro processor 116 by way of one or more electrical input lines 116a.

The common outlet point C of the restrictors 115a, 115b, 115c, is connected by a line 117 to the inlet of a further fluid flow restrictor 118 the outlet of which communicates with the return line 113b. The restrictor 118 will usually be of the fixed orifice type, but may, if desired in certain applications, be of the adjustable orifice type. A point D on the line 117 is connected by way of a line 119 forming part of a secondary hydraulic circuit to a secondary hydraulically actuated device 121. Hydraulic fluid from the device 121 is returned to the reservoir 111 by way of the line 113b. The drawing shows that if desired a pressure relief valve 122 can be incorporated in the line 119 so that in the event that the pressure in the line 119 exceeds a predetermined value then hydraulic fluid can be dumped by the valve 122 back into the return line 113b.

It will be recognised that the restrictors 115 and 118 constitute a pressure divider whereby a proportion of the pressure at A is applied via the line 119 to the device 121. Assuming that the pressure at A is constant, assuming that the value of the restrictor 118 is not altered, and assuming that the values of the restrictors 115a, 115b, 115c are different, then it will be recognised that there are eight different pressure values which can be applied to line 119 dependent upon the operative states of the valves of the restrictors 115a, 115b, 115c respectively. Moreover, by adding a further valved restrictor in parallel with the restrictors 115a, 115b, 115c then there would be sixteen possible pressure values in the line 119. The actual pressure applied to the line 119 is of course dependent upon the pressure at A, and the relative values of the restrictor 118 and the open restrictor or restrictors 115.

Such an arrangement may find use in a wide variety of different hydraulic systems where a secondary hydraulic circuit is to be energised by a proportion of the pressure energising a primary hydraulic circuit; thus for example the hydraulic system may be an hydraulic ram control system for a load lifting mechanism wherein the primary circuit supplies hydraulic fluid to the ram itself and the secondary circuit controls, for example, deceleration of the ram during lowering of the load. A further possible application is an active ride suspension system for a road vehicle wherein suspension rams form part of the primary circuit, and hydraulically powered sensitivity adjusters form part of the secondary circuit. In the past it would have been usual to utilize complex and expensive spool valves to achieve a similar effect to the obtained above by use of the simple and cost effective pressure divider.

A particularly important example of the present invention is a power assisted steering mechanism having variable stiffness control, for use in a road vehicle. The primary circuit of the hydraulic system includes the main power assistance hydraulic ram and the steering wheel operated control valve which controls the flow of hydraulic fluid to the main ram. Associated with the control valve is a stiffness control arrangement which itself is hydraulically operated, and forms part of the secondary circuit of the hydraulic system. A particularly convenient form of power assistance mechanism is that disclosed in our co-pending British Patent application no. 8825986.6 in which the main control valve includes a pair of relatively rotatable parts one of which in use is connected to the vehicle steering wheel, for manual steering input, and there is provided a stiffness control arrangement for resisting relative rotation between said two parts of the main valve. The stiffness control arrangement can provide different values of resistance to relative rotation of said parts in dependence upon a chosen parameter or parameters, for example vehicle speed. The means for resisting relative rotation includes a plurality of balls or rollers which are each located in one of a series of axially extending circumferentially spaced bores or recesses formed in an end face of a ring, so as to project axially outwardly from the associated bore or recess, into an opposed pocket formed in a flange, the ring and the flange being respectively connected to the relatively rotatable parts of the main valve. The resistance to relative rotation of the two parts is determined by the force with which the balls or rollers are urged axially into the respective pockets, and this force is controlled hydraulically.

Relating the power assisted steering mechanism to the circuit illustrated in the accompanying drawing then the pump 112 is the engine driven pump which provides the hydraulic power for the power assisted steering mechanism, the device 113 is the main control valve, and associated therewith the main ram, and the device 121 is the stiffness control arrangement of the main valve. Hydraulic fluid under pressure is supplied by the pump 112 to the main control valve 113 which, in accordance with manual input from the vehicle steering wheel, directs the hydraulic pressure output of the pump 112 to the main steering ram. The proportion of the pressure in the line 113a which is supplied to the stiffness control mechanism 121 is determined by the pressure divider 115, 118 under the control of the micro-processor 116. The inputs 116a to the micro-processor may, for example, be related to the road speed of the vehicle, the total steering angle, and the slip characteristics of the steered wheels in relation to the surface upon which the steered wheels are rolling. It will be recognised that for a given pressure at point A then there are eight different stiffness values to which the stiffness control arrangement can be set, therebeing eight different combinations of the restrictors 115. Considering, in the interests of simplicity, only an input related to vehicle speed, then at high road speed all three restrictors 115 may be opened providing maximum pressure at the stiffness control arrangement 121, and thus maximum resistance to rotation of the steering wheel. However, at for example parking speed all of the restrictors 115 may be rendered inoperative so that the pressure at point D, and therefore the pressure applied to the stiffness control arrangement, is at a minimum giving minimum resistance to rotation of the steering wheel. At intermediate speeds a single restrictor, or a combination of restrictors, may be operative to give an intermediate pressure value, and intermediate steering stiffness so as to provide a road "feel" at the steering wheel which is appropriate to the speed of travel. Naturally, the additional inputs to the micro-processor may modify the characteristics as necessary.

Although other forms of stiffness control arrangement could be utilised, the stiffness control arrangement as claimed in our co-pending British Patent application no. 8825986.6 is preferred since it is capable of operating very effectively at relatively low hydraulic pressures. This, coupled to the simple and convenient control of pressure effected by the pressure divider arrangement produces a system wherein the stiffness control can readily be powered from the back pressure of the primary hydraulic circuit. By comparison, in other known steering systems using different forms of stiffness control arrangement and without the pressure divider 115, 118, it would be necessary to provide a second source of hydraulic pressure, for example a second engine driven pump, simply to provide the hydraulic pressure necessary to energise and effectively operate the stiffness control arrangement.

It will be recognised that although the restrictors 115 and 118, and their associated hydraulic connections, are illustrated as completely different components in the accompanying drawing, they can be incorporated into a single body having external connections for both hydraulic input and output, and for the electrical inputs as described above in relation to Figures 1 and 4.

In the accompanying drawing it will be recognised that there is illustrated, in a chain dotted line, a connection directly from the pump 112 to the line 114 adjacent the point B. This connection is an alternative to the use of the line 114 connecting point B with the line 113a, and reflects the fact that many hydraulic pumps incorporate an internal return flow passage which directs excess output internally within the pump from the pump outlet back to the pump inlet. The pressure necessary to energise the secondary circuit by way of the pressure divider 115, 118 may thus be derived from the internal return passage of the pump if appropriate.

## Claims

1 A control valve characterized by comprising fluid inlet means (11), fluid outlet means (12), and a plurality of fixed orifice fluid flow restrictors (16; 17; 18) connected in parallel between said inlet means and said outlet means, the restrictors of said plurality of restrictors each being associated with a respective ON/OFF valve (20, 23; 21, 24; 22, 25) whereby the restrictor can be rendered operative, establishing communication between the inlet means and the outlet means through the restrictor, or inoperative, breaking said communication, said ON/OFF valves, in use, being respectively operatively connectable to sensors which are arranged to monitor parameters to which said control valve is required to respond.

2 A control valve as claimed in Claim 1 characterized in that each of said ON/OFF valves is linearly movable and comprises a plunger (23, 24, 25) which is connected to a solenoid (20, 21, 22).

3 A control valve as claimed in Claim 1 or Claim 2 characterized by being arranged to operate as a flow control valve.

4 A control valve as claimed in Claim 3 characterized in that said arrangement includes the provision of a by-pass valve (26, 30) arranged to open when the flow rate of fluid passing through the restrictor or restrictors is less than the flow rate flowing through said inlet means.

5 A control valve as claimed in Claim 4 characterized by including a pressure relief valve (31).

6 A control valve as claimed in Claim 1 or Claim 2 characterized by being arranged to operate as a pressure control valve, there being a further, permanently open restrictor (5; 55a) with which the openable and closeable restrictors define a pressure divider.

7 A control valve as claimed in any one of the preceding claims characterized by comprising a block (10) which is formed with a plurality of passages comprising an inlet, an outlet and other passages (13; 14; 15) each including a restrictor (16; 17; 18) interconnecting said inlet and said outlet, some at least of said other passages being each associated with the plunger (23; 24; 25) of a solenoid (20; 21; 22) which can be moved between a position in which the associated passage is open and an alternative position in which the associated passage is closed, said solenoids being connected in use to a microprocessor (42) which itself is connected in use to a plurality of sensors (43) monitoring parameters to which the control valve is required to respond.

8 An hydraulic system characterized by comprising a primary hydraulic circuit, a primary source (112) of hydraulic pressure for energising said primary circuit, a secondary circuit, and a pressure divider unit whereby hydraulic pressure derived from said primary source (112) is applied to said secondary circuit to energise said secondary circuit, said pressure divider unit comprising a plurality of fixed orifice fluid flow restrictors (115a, 115b, 115c) connected in parallel between a supply line (114) which, in use, receives hydraulic pressure from said primary source, and the inlet of a further flow restrictor (118), the restrictors (115) of said plurality of restrictors each being associated with a respective electrically operable ON/OFF valve whereby the restrictor can be rendered operative, or inoperative, said secondary hydraulic circuit receiving hydraulic pressure from the line connecting the outlets of said restrictors of said plurality of restrictors and the inlet of said further restrictor whereby the pressure supplied to said secondary hydraulic circuit is a proportion of the pressure in said supply line, the proportion being determined by said further restrictor (118), and the operative restrictor, or combination of operative restrictors of said plurality of restrictors (115).

9 An hydraulic system as claimed in Claim 8 characterized in that said primary hydraulic circuit includes a power assistance mechanism for a vehicle steering system, said primary source of hydraulic pressure is an hydraulic pump driven by the engine of the vehicle in use, and said secondary hydraulic circuit includes the stiffness control arrangement of the steering wheel operated valve of the power assistance mechanism.

10 An hydraulic system as claimed in Claim 9 characterized in that said stiffness control arrangement is axially operable.

11 An hydraulic power assisted steering system for a vehicle characterized by comprising a primary hydraulic circuit energised by an hydraulic pump driven in use by the engine of the vehicle and including steering control member to supply hydraulic fluid to an hydraulic steering actuator, a secondary hydraulic circuit including a stiffness control of the steering control valve, and a pressure control valve as claimed in Claim 6 whereby the secondary hydraulic circuit is energised by said pump at a pressure which is a controllable proportion of the pressure in the primary circuit.

FIG 1

FIG 2

FIG 3

FIG 4

FIG 5